# EUROPÄISCHE PATENTSCHRIFT

(11) **EP 2 309 639 B1**
(45) Veröffentlichungstag und Bekanntmachung des Hinweises auf die Patenterteilung: **10.02.2016**
(21) Anmeldenummer: 09172672.9
(22) Anmeldetag: 09.10.2009
(51) Int. Cl.: H02M 7/5395, H02M 1/42, H02J 3/18, H02J 3/38

(54) **Blindleistungsfähiger Wechselrichter**
Reactive power-capable inverter
Onduleur capable de puissance réactive

(43) Veröffentlichungstag der Anmeldung: 13.04.2011
(73) Patentinhaber: SMA Solar Technology AG, 34266 Niestetal (DE)
(72) Erfinder: Zacharias, Professor Dr.-Ing. Peter, 34131 Kassel (DE); Mallwitz, Dr. Regine, 34131 Kassel (DE); Vasconcelos Araújo, Samuel, 34119 Kassel (DE); Sahan, Dipl.-Ing. Benjamin, 34121 Kassel (DE)

(56) Entgegenhaltungen:
- EP-A2- 1 369 985
- DE-A1- 4 135 680
- US-A1- 2005 286 281
- US-A1- 2006 013 024
- Frisch, Michael; Ernö, Temesi: "High Efficient Topologies for Next Generation Solar Inverter" 31. Juli 2008 (2008-07-31), Seiten 1-6, XP002571175 Gefunden im Internet: URL:http://download.vincotech.com/power/do cumentsection/AN80717HighEfficientInverter Topologies.pdf> [gefunden am 2010-03-02]

## Beschreibung

### TECHNISCHES GEBIET DER ERFINDUNG

Die Erfindung bezieht sich auf einen Wechselrichter mit zwei Eingangsleitungen zum Anschluss an eine Gleichspannungsquelle und mit zwei Ausgangsleitungen zum Anschluss eines Wechselstromverbrauchers oder eines Wechselstromnetzes sowie mit den weiteren Merkmalen des Oberbegriffs des unabhängigen Patentanspruchs 1.

Bei der Gleichspannungsquelle kann es sich beispielsweise um eine Photovoltaikanlage oder eine Windkraftanlage, d. h. um eine regenerative Energiequelle, aber auch um eine Brennstoffzelle oder eine Batterie handeln. Die von der Gleichspannungsquelle kommende elektrische Energie wird von dem Wechselrichter einem einzelnen Wechselstromverbraucher oder über ein Wechselstromnetz einer Mehrzahl von Wechselstromverbrauchern zur Verfügung gestellt.

### STAND DER TECHNIK

Aus der Zeitschrift Bodo's Power Systems, Ausgabe August 2008, Seiten 20 bis 24, Michael Frisch und Temesi Ernö, Vincotech: "High Efficient Topologies for Next Generation Solar Inverter" sind verschiedene Topologien für Wechselrichter für Photovoltaikanlagen bekannt. Hierzu zählt ein Wechselrichter mit den Merkmalen des Oberbegriffs des unabhängigen Patentanspruchs 1, der in der Figur 13 der Druckschrift dargestellt ist. Bei diesem Wechselrichter sind die zwischen den Mittelpunkten der Halbbrücken und der einen der Eingangsleitungen angeordneten Schalter IGBT-Halbleiterschalter, die mit der Frequenz des von Wechselrichter abgegebenen Wechselstroms von bspw. 50 Hz getaktet werden und denen externe Freilaufdioden antiparallel geschaltet sind. Die zwischen die Mittelpunkte der Halbbrücken und die andere Eingangsleitung geschalteten Schalter sind MOSFET-Halbleiterschalter, die mit einer höheren Frequenz von beispielsweise 16 kHz getaktet werden, um mittels Pulsweitenmodulation einen sinusförmigen Ausgangsstrom des Wechselrichters zu formen. Diese MOSFET-Halbleiterschalter weisen inhärente antiparallele Dioden auf. Derartige MOSFET-Halbleiterschalter sollen nach Aussage der hier gewürdigten Druckschrift auf der anderen Seite der Halbbrücken nicht verwendet werden können, weil ihre inhärenten Dioden zu langsam sind. Zu diesem bekannten Wechselrichter wird eine EE (Euro Efficiency) bei 2 kW Nennleistung von 99,2 % angegeben. Da die Schalter auf der einen Seite der Halbbrücken nur mit der Frequenz von beispielsweise 50 Hz getaktet werden, auf die der Wechselrichter richtet, ist es nicht notwendig, den durch sie fließenden Strom zu filtern. Daher wird in der hier gewürdigten Druckschrift vorgeschlagen, die zwischen den Mittelpunkten der Halbbrücken und der einen Eingangsleitung vorgesehenen Schalter erst hinter der jeweiligen Induktivität direkt zwischen die jeweilige Ausgangsleitung und die eine Eingangsleitung zuschalten, wobei aber die jeweilige Diode zwischen dem Mittelpunkt der Halbbrücke und der einen Eingangsleitung verbleibt. Ein entsprechender Wechselrichter ist in Figur 14 der Druckschrift dargestellt. Bei diesem können die IGBT-Halbleiterschalter durch MOSFET-Halbleiterschalter ersetzt werden. Hierdurch wird für den Wechselrichter eine auf 99,4 % erhöhte EE bei zwei 2 kW Nennleistung erreicht, wenn die direkt zwischen den Mittelpunkten der Halbbrücken und der einen Eingangsleitung verbleibenden Dioden als SiC-Dioden ausgebildet werden. Der tatsächliche Wirkungsgrad soll sogar noch höher liegen, weil die mit der Frequenz des abgegebenen Wechselstroms getakteten MOSFET-Halbleiterschalter nicht die der Simulation zugrunde liegende Temperatur von 125°C erreichen. Dieser Wirkungsgrad ist sehr hoch und wird mit einer nur kleinen Anzahl von Bauteilen erreicht. Dieser bekannte Wechselrichter ist jedoch aufgrund seiner Topologie grundsätzlich nur zur Abgabe reiner Wirkleistung geeignet. Die Aussage der hier gewürdigten Druckschrift, unter Verwendung von FRED-FET-Halbleiterschaltern und unter Inkaufnahme der hiermit verbundenen Nachteile, einschließlich eines reduzierten Wirkungsgrads, sei mit dem Wechselrichter auch eine Abgabe von Blindleistung möglich, ist unzutreffend. In jedem Fall wird in der hier gewürdigten Druckschrift zur Abgabe von Blindleistung vorgeschlagen, den Wechselrichter mit der bereits abgewandelten Topologie, der nicht mehr dem Oberbegriff des unabhängigen Patentanspruchs 1 entspricht, um zwei weitere SiC-Dioden jeweils zwischen einem der verlagerten Halbleiterschalter und der anderen Ausgangsleitung zu ergänzen und die Mittelpunkte der derart gebildeten zusätzlichen Halbbrücken über jeweils eine zusätzliche Induktivität mit den Ausgangsleitungen zu verbinden. Die in Figur 16 der Druckschrift dargestellte Topologie dieses blindleistungstauglichen Wechselrichters umfasst so insgesamt vier Halbbrücken aus jeweils einem Halbleiterschalter und einer SiC-Diode, wobei die Halbleiterschalter bei einem Paar von Halbbrücken an die eine und bei dem anderen Paar von Halbbrücken die andere Eingangsleitung angrenzen, wobei zwischen den Mittelpunkt jeder Halbbrücke und die jeweilige Ausgangsleitung eine Induktivität geschaltet ist, wobei die Mittelpunkte jeweils einer Halbbrücke pro Paar mit derselben Ausgangsleitung verbunden sind und wobei die zu jeweils einer Ausgangsleitung hin filternden Induktivitäten gekoppelt sind. Dabei wird die Verwendung von SiC-Schottky-Dioden empfohlen. Da bei dieser Topologie jedoch der fließende Strom jeweils durch zwei Induktivitäten gefiltert wird, kann der hohe Wirkungsgrad des zuvor beschriebenen, nicht blindleistungsfähigen Wechselrichters nicht erreicht werden.

Es ist weiterhin bekannt, dass die Schalter der beiden Halbbrücken eines Wechselrichters mit den Merkmalen des Oberbegriffs des unabhängigen Patentanspruchs 1 in diagonal angeordneten Paaren hochfrequent getaktet werden können, um einen sinusförmigen Ausgangsstrom des Wechselrichters zu erzeugen. Man spricht dabei von bipolarer Modulation. Bei dieser springt die Ausgangsspannung hochfrequent zwischen den beiden Eingangspotentialen des Wechselrichters, was zu einem hohen Stromripple in den Induktivitäten führt. Ein weiterer Nachteil ist, dass der Stromfreilauf durch die antiparallelen Dioden zu eingangsseitigen Kapazitäten hin verläuft, was in zusätzliche Verluste aufgrund des internen Blindleistungsflusses in dem Wechselrichter führt. Dieser bekannte Wechselrichter ist aber grundsätzlich geeignet, auch Blindleistung abzugeben.

### AUFGABE DER ERFINDUNG

Der Erfindung liegt die Aufgabe zugrunde, einen Wechselrichter mit den Merkmalen des Oberbegriffs des unabhängigen Patentanspruchs 1 aufzuzeigen, der sowohl einen hohen Wirkungsgrad als auch die Fähigkeit aufweist, Blindleistung abzugeben.

### LÖSUNG

Die Aufgabe der Erfindung wird durch einen Wechselrichter mit den Merkmalen des unabhängigen Patentanspruchs 1 gelöst. Vorteilhafte Ausführungsformen des neuen Wechselrichters sind in den abhängigen Patentansprüchen beschrieben.

### BESCHREIBUNG DER ERFINDUNG

Bei dem neuen Wechselrichter sind alle Ausgangsleitungen zusätzlich zu den aus jeweils zwei Schaltern aufgebauten Halbbrücken, hinter der jeweiligen Induktivität über jeweils einen weiteren taktbaren Schalter direkt, d. h. ohne Zwischenschaltung der Induktivität, mit derselben Eingangsleitung verbunden. Der neue Wechselrichter weist damit insgesamt sechs taktbare Schalter auf. Dabei kann er nicht nur als Ergänzung eines Wechselrichters mit zwei jeweils zwei Schalter aufweisenden Halbbrücken um die beiden weiteren Schalter direkt zwischen den Ausgangsleitungen und der einen Eingangsleitung angesehen werden, sondern auch als der im Abschnitt "Stand der Technik" oben beschriebene Wechselrichter mit dem sehr großen Wirkungsgrad, der um zusätzliche Schalter zwischen den Mittelpunkten der Halbbrücken und der einen Eingangsleitung parallel zu den dort allein vorgesehenen Dioden ergänzt ist. Der neue Wechselrichter weist damit alle Funktionalitäten dieses bekannten Wechselrichters mit sehr hohem Wirkungsgrad bei der Wirkleistungsabgabe als auch alle Funktionalitäten bekannter Wechselrichter mit zwei Halbbrücken aus jeweils zwei mit antiparallelen Dioden kombinierten Schaltern, einschließlich der Fähigkeit zur Blindleistungsabgabe, auf. Damit verbunden sind zwar auch die Nachteile dieser zuletzt genannten Wechselrichter, insbesondere ein schlechterer Wirkungsgrad. Dieser wirkt sich bei dem neuen Wechselrichter aber nur während des tatsächlichen Ausgebens von Blindleistung aus. Die entsprechenden Zeiträume sind relativ kurz und können weiter verkürzt werden, wie noch dargelegt werden wird. So ist der Einfluss des schlechteren Wirkungsgrads des neuen Wechselrichters beim Einspeisen von Blindleistung auf den praktischen Gesamtwirkungsgrad des neuen Wechselrichters nur gering.

Bei dem neuen Wechselrichter kann jede Ausgangsleitung von der zugehörigen Halbbrücke aus gesehen hinter der Induktivität, über eine weitere Diode zusätzlich direkt mit der anderen Eingangsleitung verbunden sein. Die Ausgangsleitungen sind so jeweils auch direkt über eine Halbbrücke bestehend aus einem der weiteren Schaltern und einer der weiteren Dioden mit den beiden Eingangsleitungen verbunden. Dabei begrenzen die weiteren Dioden einlaufende transiente Netzüberspannungen auf die Eingangsgleichspannung zwischen den Eingangsleitungen. Dadurch ist der neue Wechselrichter gegenüber derartigen Überspannungen unempfindlich.

Die zwischen dem Mittelpunkt jeder Halbbrücke und der einen Eingangsleitung vorgesehene antiparallele Diode der Halbbrücke ist vorzugsweise eine Schottky-Diode, am meisten bevorzugt eine SiC-Schottky-Diode. Das Schaltverhalten derartiger Dioden erfüllt besonders gut die hier bestehende Anforderung eines schnellen Schaltens. Bei den diesen Dioden parallel geschalteten Schaltern handelt es sich vorzugsweise um IGBT-Halbleiterschalter ohne inhärente Diode. Die Kombination dieser Bauteile wirkt sich günstig auf die Schaltverluste der antiparallelen Diode während des Stromfreilaufs bei der Abgabe von Wirkleistung durch den neuen Wechselrichter aus.

In derselben Beziehung ist es vorteilhaft, wenn der zwischen dem Mittelpunkt jeder Halbbrücke und der anderen Eingangsleitung vorgesehene Schalter einen MOSFET-Halbleiterschalter mit inhärenter antiparalleler Diode ist. Bei der Abgabe von Wirkleistung ist der MOSFET-Halbleiterschalter nur als Schalter aktiv. Seine inhärente antiparallele Diode führt nur beim Abgeben von Blindleistung Strom.

Da es auf die Dioden der weiteren Schalter nicht ankommt, kann jeder weitere Schalter, der direkt zwischen einer der Ausgangsleitungen und der einen Eingangsleitung vorgesehen ist, ein IGBT-Halbleiterschalter oder ein Thyristor-Halbleiterschalter ohne inhärente antiparallele Diode, aber auch ein MOSFET-Halbleiterschalter mit inhärenter Diode sein, was Vorteile hinsichtlich des Wirkungsgrads beim Abgeben von Wirkleistung hat. Der unmittelbare Einsatz von Thyristoren für die weiteren Schalter ist deshalb möglich, weil jeder zwischen dem Mittelpunkt einer der Halbbrücken und der anderen Eingangsleitung vorgesehene hochfrequent getaktete Schalter den durch den zugeordneten eingeschalteten Thyristor fließenden Strom am Ende der jeweiligen sinusförmigen Halbwelle des abgegebenen Wechselstroms auf null zurückführt und dadurch den Thyristor löscht.

Bei dem neuen Wechselrichter kann eine der beiden Ausgangsleitungen geerdet sein, um dieser ein festes Erdpotential zu geben, wie dies bei dem Nullleiter eines einphasigen Wechselstromnetzes regelmäßig der Fall ist. Die Eingangsleitungen können hingegen nicht geerdet werden und entsprechend ist der neue Wechselrichter nur für solche Gleichspannungsquellen geeignet, bei denen keine der Strom zu dem Wechselrichter führenden Leitungen geerdet sein muss.

Für die Störfestigkeit des neuen Wechselrichters erweist es sich als günstig, wenn die eine Eingangsleitung, die über die weiteren Schalter direkt mit den Ausgangsleitungen verbindbar ist, für die positive Polarität der jeweiligen Gleichspannungsquelle gegenüber Erde vorgesehen ist. In diesem Fall müssen die Spannungsversorgung und Signale für Treiber der Schalter, die zwischen den Mittelpunkten der Halbbrücken und der anderen Eingangsleitung vorgesehen sind, nicht gegenüber einem geschalteten Bezugspotential erzeugt werden. Dies ist von Vorteil, weil diese Schalter im Gegensatz zu den anderen beim Abgeben von Wirkleistung durch den neuen Wechselrichter hochfrequent getaktet werden.

Grundsätzlich taktet eine Steuerung des neuen Wechselrichters in jedem Betriebsmodus des Wechselrichters jeweils nur vier von den insgesamt sechs Schaltern, während sie die beiden anderen Schalter offenhält, oder zumindest keine Ströme mit ihnen schaltet.

In einem Betriebsmodus des Wechselrichters zum Abgeben von reiner Wirkleistung taktet die Steuerung beispielsweise die weiteren Schalter mit der Frequenz, auf die der Wechselrichter richtet, während sie die zwischen den Mittelpunkten der Halbbrücken und der anderen Eingangsleitung angeordneten Schalter mit einer um ein Vielfaches höheren Frequenz taktet, um dem abgegebenen Strom die gewünschte Sinusform zu geben. In einem anderen Betriebsmodus des Wechselrichters zum Ausgeben von reiner Wirkleistung, in dem die zwischen den Eingangsleitungen anliegende Eingangsgleichspannung hochgesetzt wird, um beispielsweise bei einer bereits unter der Scheitelspannung eines angeschlossenen Wechselstromnetzes doch noch eine Einspeisung in das Wechselstromnetz vornehmen zu können, hält die Steuerung die zwischen den Mittelpunkten der Halbbrücken und der anderen Eingangsleitung angeordneten Schalter wechselweise vorübergehend geschlossen, während sie die weiteren Schalter mit einer Frequenz taktet, die um ein Vielfaches höher ist als die Frequenz, auf die der Wechselrichter richtet. Die Funktionsweise des Wechselrichters ist dabei diejenige von zwei Hochsetzstellern, während das Funktionsprinzip bei dem zuvor beschriebenen Betriebsmodus mit demjenigen von zwei Tiefsetzstellern vergleichbar ist. Der Wirkungsgrad des Wechselrichters ist beim Hochsetzen der Eingangsgleichspannung zwar nicht so gut, wie in der zuvor beschriebenen Betriebsweise, dies ist aber unerheblich, wenn nur unter Hochsetzen der Eingangsgleichspannung überhaupt noch eine Einspeiseleistung des Wechselrichters realisierbar ist.

Um mit dem neuen Wechselrichter Blindleistung auszugeben, taktet seine Steuerung die Schalter der Halbbrücken überkreuz mit einer Frequenz, die um ein Vielfaches höher ist als die Frequenz, auf die der Wechselrichter richtet. Damit kann dem abgegebenen Wechselstrom eine gewünschte Phasenlage phi relativ zu der Phase der Spannung beispielsweise eines angeschlossenen Wechselstromnetzes aufgeprägt werden.

Um den hohen Wirkungsgrad des neuen Wechselrichters beim Einspeisen von Wirkleistung über möglichst lange Zeiträume zu nutzen, kann die Steuerung einen von cos phi = 1 abweichenden Leistungsfaktor des ausgegebenen Wechselstroms auch durch blockweises Ausgeben von reiner Wirkleistung und reiner oder zumindest annähernd reiner Blindleistung über jeweils mehrere Perioden des Wechselstroms realisieren. Dabei ist es bevorzugt, wenn die Steuerung jeweils in einem Nulldurchgang der Spannung zwischen dem Ausgeben von Wirkleistung und Blindleistung umschaltet, um für diese Umschaltung günstige Voraussetzungen zu nutzen.

Wenn mehrere Wechselrichter parallel geschaltet werden kann entsprechend eine übergeordnete Steuerung einen von cos phi = 1 abweichenden Leistungsfaktor des insgesamt ausgegebenen Wechselstroms durch Ausgeben von reiner Wirkleistung mit der Mehrzahl der Wechselrichter und von Blindleistung mit nur wenigen Wechselrichtern realisieren. Zumindest dann, wenn auch Fälle auftreten, in denen ein Leistungsfaktor von cos phi = 1 verlangt wird, sollten zumindest diese wenigen Wechselrichter erfindungsgemäß ausgebildet sein, um Wirkleistung abgeben zu können. Die Parallelschaltung kann aber durchaus auch einzelne Wechselrichter enthalten, die nicht erfindungsgemäß ausgebildet sind, sondern nur reine Wirkleistung mit hohem Wirkungsgrad abgeben können.

Vorteilhafte Weiterbildungen der Erfindung ergeben sich aus den Patentansprüchen, der Beschreibung und den Zeichnungen.

Die Kombination von Merkmalen unterschiedlicher Ausführungsformen der Erfindung oder von Merkmalen unterschiedlicher Patentansprüche ist ebenfalls ansprüche kombiniert werden.

### KURZBESCHREIBUNG DER FIGUREN

Die Erfindung wird im Folgenden anhand von bevorzugten Ausführungsbeispielen unter Bezugnahme auf die beigefügten Zeichnungen näher erläutert und beschrieben.
- **Fig. 1**: zeigt eine erste Ausführungsform des neuen Wechselrichters.
- **Fig. 2**: zeigt eine zweite Ausführungsform des neuen Wechselrichters mit anderem Bezugspotential für die Treiberschaltungen und zusätzlichen Dioden gegen Netzüberspannungen.
- **Fig. 3**: skizziert die Ansteuerung der Schalter in einem ersten Betriebsmodus mit reiner Wirkleistungsabgabe des Wechselrichters gemäß Fig. 1 bei positivem (a) und negativem (b) Netzstrom.
- **Fig. 4**: skizziert die Ansteuerung der Schalter in einem ersten Betriebsmodus mit reiner Wirkleistungsabgabe des Wechselrichters gemäß Fig. 2 bei positivem (a) und negativem (b) Netzstrom.
- **Fig. 5**: skizziert die Ansteuersignale für den Wechselrichter gemäß Fig. 1 oder 2 bei reiner Wirkleistungsabgabe.
- **Fig. 6**: skizziert die Ströme durch die Induktivitäten in den Ausgangsleitungen der Wechselrichter gemäß Fig. 1 und Fig. 2 bei reiner Wirkleistungsabgabe.
- **Fig. 7**: skizziert den aus den Strömen gemäß Fig. 6 resultierenden Netzstromverlauf.
- **Fig. 8**: skizziert die Potentialverläufe an den Eingangsleitungen des Wechselrichters bei der Abgabe reiner Wirkleistung durch den Wechselrichter gemäß Fig. 1.
- **Fig. 9**: skizziert die Potentialverläufe an den Eingangsleitungen des Wechselrichters bei der Abgabe reiner Wirkleistung durch den Wechselrichter gemäß Fig. 2.
- **Fig. 10**: skizziert die Ansteuerung der Schalter zur Abgabe von Blindleistung durch den Wechselrichter gemäß Fig. 1 (a) und Fig. 2 (b).
- **Fig. 11**: zeigt eine Parallelschaltung von mehreren Wechselrichtern zur Einspeisung von elektrischer Energie mit einem Leistungsfaktor von cos phi ≤ 1 in ein Wechselstromnetz.
- **Fig. 12**: skizziert die Umschaltung zwischen der Abgabe reiner Wirkleistung und reiner Blindleistung bei einem Wechselrichter gemäß Fig. 1 oder Fig. 2; und
- **Fig. 13**: zeigt die Ansteuersignale in einem alternativen Betriebsmodus des Wechselrichters gemäß Fig. 1 oder Fig. 2 für die Abgabe reiner Wirkleistung, wenn die Eingangsgleichspannung zwischen den Eingangsleitungen des Wechselrichters kleiner als die Scheitelspannung eines angeschlossenen Wechselstromnetzes ist.

### FIGURENBESCHREIBUNG

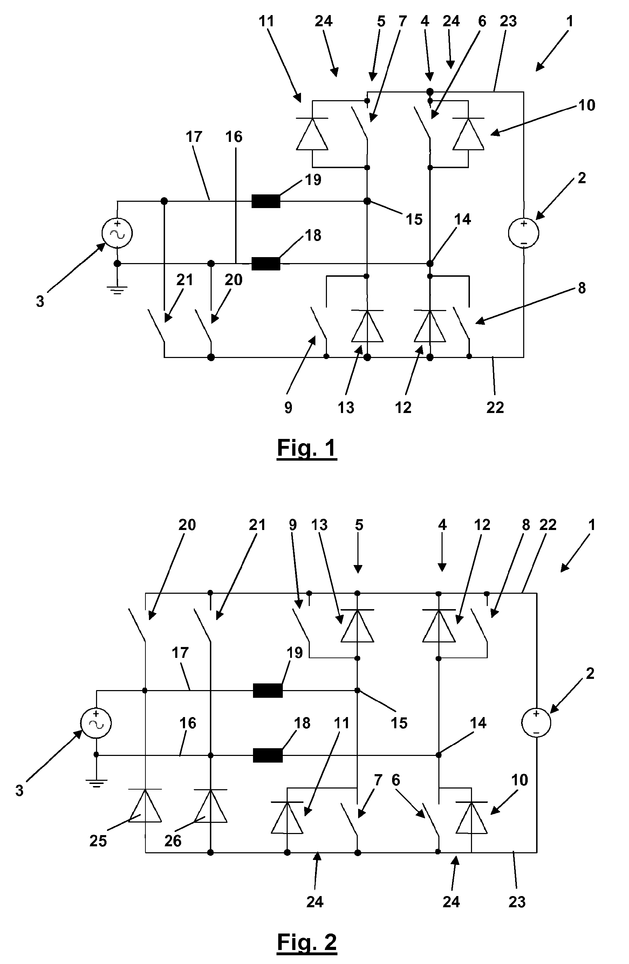

Der in **Fig. 1** dargestellte Wechselrichter 1 dient zur Einspeisung von elektrischer Energie von einer Gleichspannungsquelle 2, beispielsweise einer Photovoltaikanlage, in ein Wechselstromnetz 3. Der Wechselrichter weist zwei Halbbrücken 4 und 5 auf, die jeweils zwei Schalter 6 und 8 bzw. 7 und 9 mit antiparallel geschalteten Dioden 10 und 12 bzw. 11 und 13 umfassen. Zwischen Mittelpunkten 14 und 15 der Halbbrücken 4 und 5 und zu dem Wechselstromnetz 3 führenden Ausgangsleitungen 16 und 17 des Wechselrichters 1 ist jeweils eine Induktivität 18 bzw. 19 als Stromfilter angeordnet. Von den Mittelpunkten 14 und 15 aus jenseits der Induktivitäten 18 und 19 sind weitere Schalter 20 und 21 direkt zwischen die Ausgangsleitungen 16 und 17 und eine der Eingangsleitungen 22 des Wechselrichters 1 geschaltet. Diese Eingangsleitung 22 liegt hier auf negativem Potential, während die andere Eingangsleitung 23 des Wechselrichters auf positivem Potential liegt. Die eine Ausgangsleitung 16 ist hier durch Erdung eines Pols des Wechselstromnetzes 3 geerdet. Die Schalter 6 und 7 zwischen den Mittelpunkten 14 und 15 und der anderen Eingangsleitung 23 des Wechselrichters sind als MOSFET-Halbleiterschalter 24 mit inhärenten Dioden 10 und 11 ausgebildet. Die Schalter 12 und 13 zwischen den Mittelpunkten 14 und 15 und der einen Eingangsleitung 22 sind hingegen IGBT-Halbleiterschalter, denen separate Dioden 12 und 13 antiparallel geschaltet sind. Die Schalter 20 und 21 können ebenfalls IGBT- oder auch MOSFET-Halbleiterschalter sein. Dabei sind die Schalter 6 und 7 zur hochfrequenten Taktung durch eine hier nicht dargestellte Steuerung des Wechselrichters 1 vorgesehen, ebenso wie die Schalter 12 und 13, während die Schalter 20 und 21 in dieser Ausführungsform des Wechselrichters 1 nur zu einer Taktung mit der Netzfrequenz des Wechselstromnetzes 3 vorgesehen sind.

Bei dem Wechselrichter 1 gemäß Fig. 1 muss die Spannungsversorgung der Steuerung und müssen Signale für die Treiber der Schalter 6 und 7, die, wie im Folgenden noch erläutert werden wird, am häufigsten geschaltet werden, gegen ein geschaltetes Bezugspotential erzeugt werden. Dies ist hinsichtlich des zu betreibenden Aufwands und der Störfestigkeit von Nachteil. **Fig. 2** zeigt eine Abwandlung des Wechselrichters 1, die diesen Nachteil vermeidet, indem die hochfrequent getakteten Schalter 6 und 7 hier an den negativen Pol der Gleichspannungsquelle 2 angeschlossen sind. Außerdem sind bei dem Wechselrichter 1 gemäß Fig. 2 zwei zusätzliche Dioden 25 und 26 vorgesehen, die bei einlaufenden transienten Überspannungspulsen durch Netzstörungen diese Überspannungen auf die Gleichspannung der Gleichspannungsquelle begrenzen. Damit wird der Wechselrichter 1 gemäß Fig. 2 gegenüber derartigen Störungen ähnlich unempfindlich wie unter den Stichworten H5, Heric oder Vollbrücke bekannte Wechselrichterschaltungen.

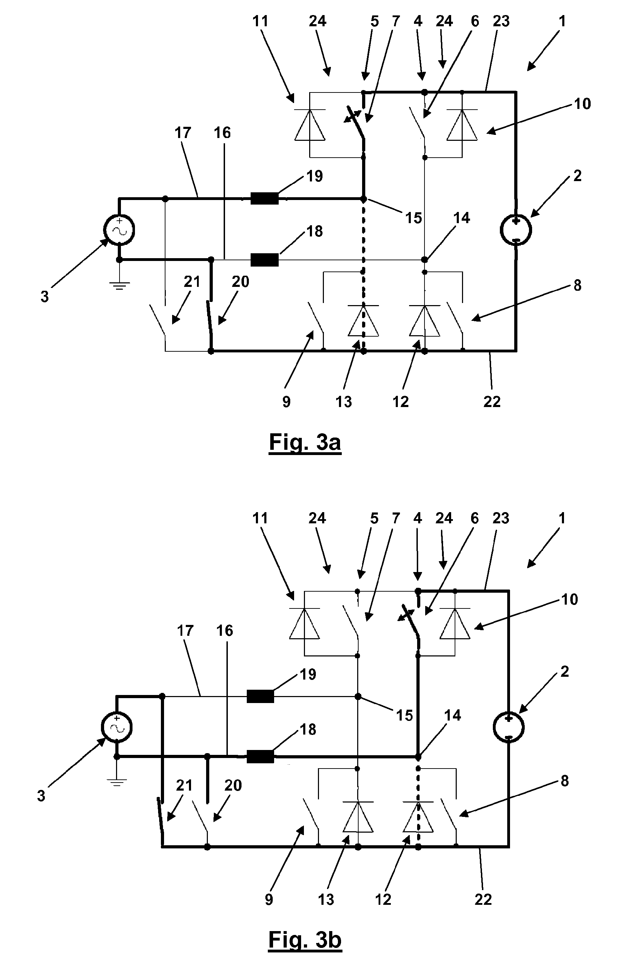

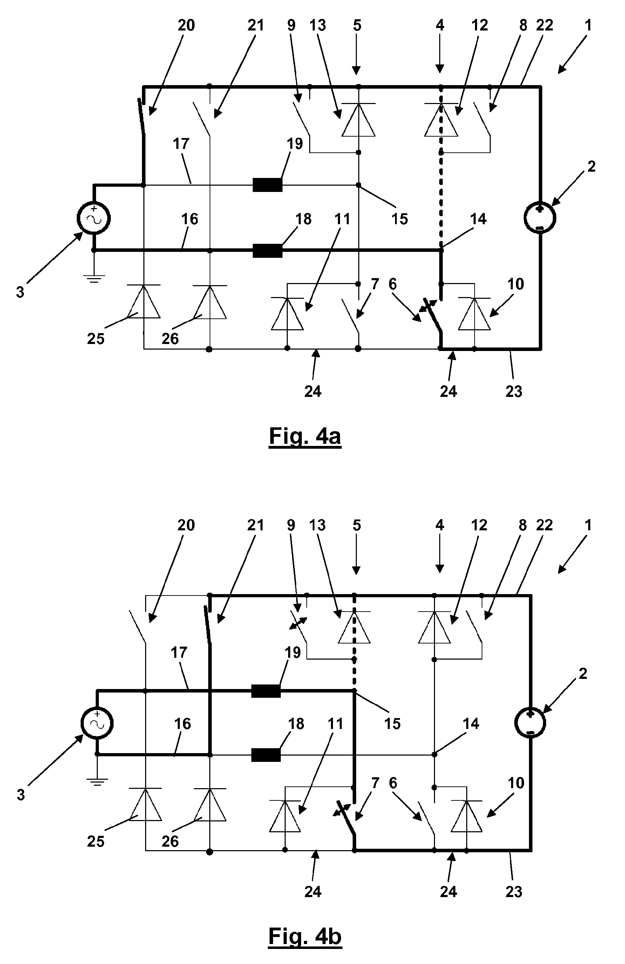

Das Funktionsprinzip bei reiner Wirkleistungsabgabe durch den Wechselrichter 1 gemäß Fig. 1 und Fig. 2 ist identisch. Es basiert auf zwei Tiefsetzstellern, welche den Ausgangsstrom für je eine Polarität der Netzspannung modulieren. Für die positive Polarität wird der Strom durch die hochfrequente Taktung des Schalters 6 moduliert und fließt durch die Induktivität 18. Beim Ausschalten des Schalters 6 erfolgt der Stromfreilauf durch die Diode 12. Für die negative Polarität wird der Strom durch die hochfrequente Taktung des Schalters 7 moduliert und fließt durch die Induktivität 19. Beim Ausschalten des Schalters 7 erfolgt der Stromfreilauf durch die Diode 13. Mit Hilfe der zusätzlichen, mit Netzfrequenz getakteten Schalter 20 und 21 werden diese beiden Tiefsetzsteller so kombiniert, dass der Strom durch das angeschlossene Wechselstromnetz 3 in positiver oder negativer Richtung fließt. Dazu bleiben die Schalter 20 und 21 jeweils während einer Netzhalbwelle eingeschaltet und schließen dadurch den Stromkreis. Während dieser Abgabe von Wirkleistung, die in **Fig. 3** für den Wechselrichter 1 gemäß Fig. 1 und in **Fig. 4** für den Wechselrichter 1 gemäß Fig. 2 für jeweils positiven (a) und negativen (b) Netzstrom dargestellt ist, bleiben die Schalter 8 und 9 geöffnet und die Dioden 10 und 11 sind ebenfalls nicht aktiv, d. h. stromlos. Von Vorteil ist dabei, dass der Stromfreilauf in diesem Wirkleistungsbetrieb nicht durch die antiparallelen Dioden 10 und 11 der hochfrequent getakteten Schalter 6 und 7 erfolgt. Die Schalter 6 und 7 können deshalb günstig als MOSFET-Halbleiterschalter ausgeführt werden. Die den Freilaufstrom führenden Dioden 12 und 13 sind hingegen vorzugsweise als SiC-Schottky-Dioden ausgeführt.

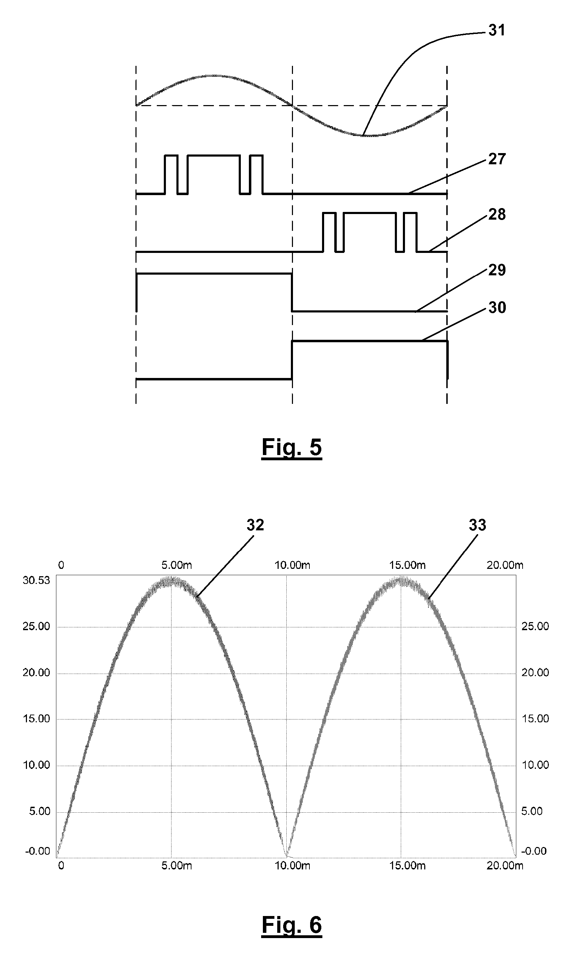

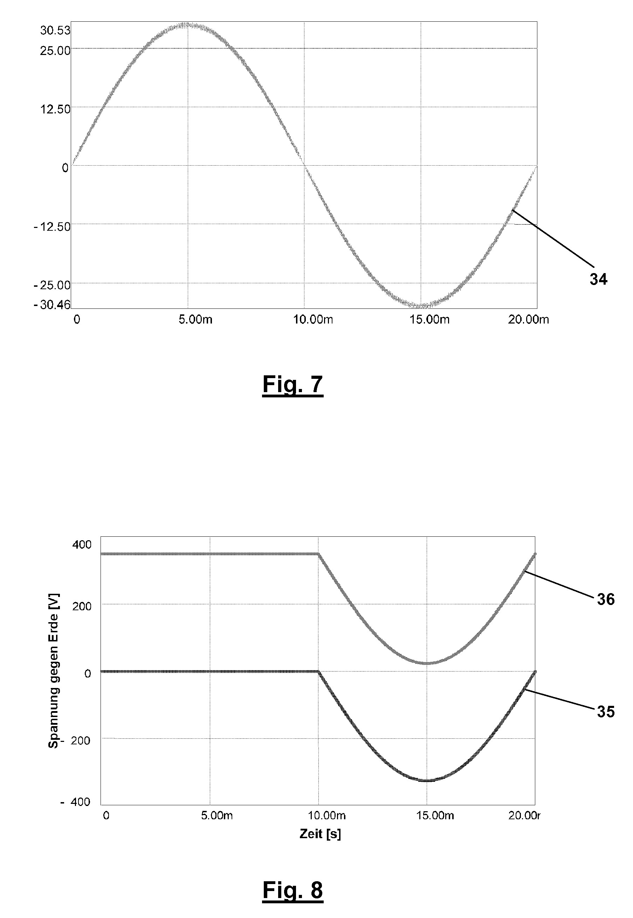

**Fig. 5** zeigt die Ansteuersignale 27 bis 30 für die Schalter 7 und 6 sowie 20 und 21 relativ zu den beiden Halbwellen der Netzspannung 31 des Wechselstromnetzes 3 während der Wirkleistungsabgabe gemäß den Fig. 3 und Fig. 4. **Fig. 6** zeigt die resultierenden Ströme 32 und 33 durch die Induktivitäten 18 und 19; während **Fig. 7** den resultierenden Netzstrom 34 durch das Wechselstromnetz 3 zeigt.

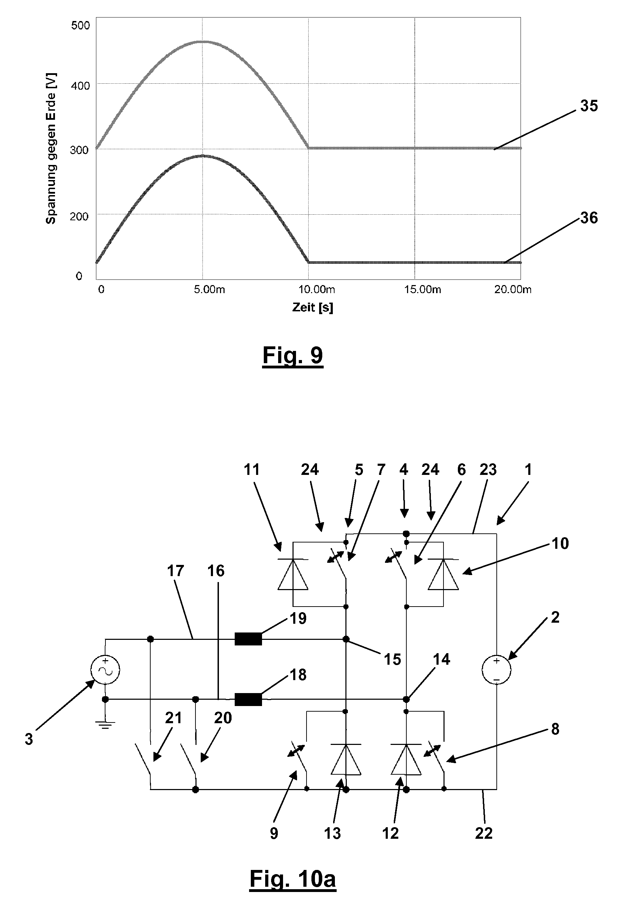

**Fig. 8** stellt die resultierenden Potentialverläufe 35 und 36 an den Eingangsleitungen 22 und 23 und den entsprechenden Anschlüssen der Gleichspannungsquelle 2 bei der Wirkleistungsabgabe gemäß Fig. 3 dar, während **Fig. 9** die entsprechenden Potentialverläufe 35 und 36 der Eingangsleitungen 22 und 23 bei der Wirkleistungsabgabe gemäß Fig. 4 darstellt. Bei der Wirkleistungsabgabe ist die Eingangsleitung 22 des Wechselrichters 1 während einer Halbwelle der Netzspannung jeweils über den Schalter 20 mit dem Erdpotential des einen Pols des Wechselstromnetzes und während der anderen Halbwelle über den Schalter 21 mit der Phase des Wechselstromnetzes verbunden. Damit sind hochfrequente Potentialsprünge der Anschlussleitungen der Gleichspannungsquelle unmöglich. Entsprechend treten keine hochfrequenten Ableitströme auf.

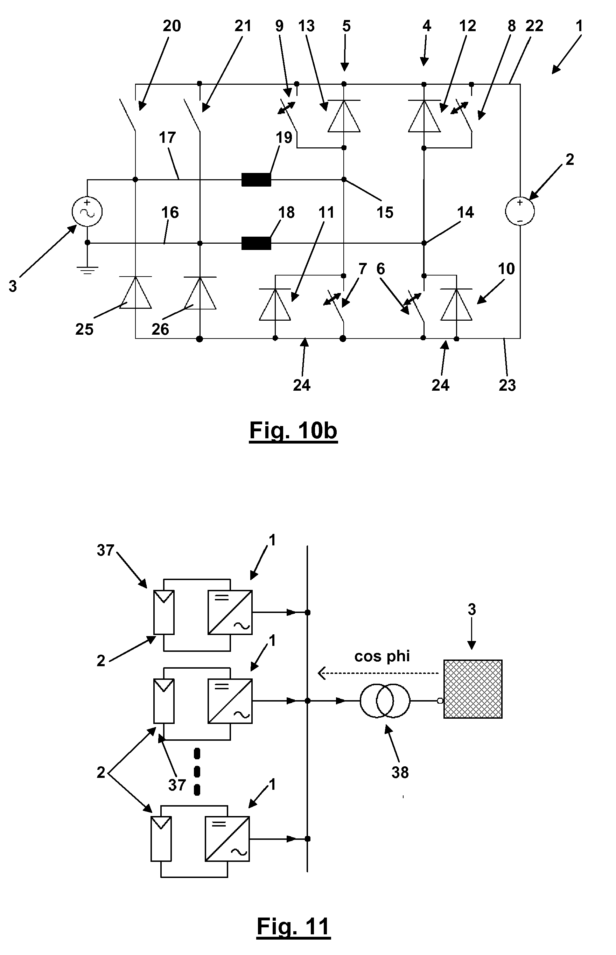

Um bei dem Wechselrichter 1 von Wirkleistungsabgabe auf Blindleistungsabgabe umzuschalten, werden die Schalter 20 und 21 in einem Nulldurchgang der Netzspannung deaktiviert und anschließend die anderen vier Schalter 5 bis 8 als Vollbrücke mit Spannungszwischenkreis hochfrequent getaktet, welche über die Induktivitäten 18 und 19 einen Strom mit variablem Leistungsfaktor in das Wechselstromnetz einspeist. Die Schalter 6 und 9 sowie 7 und 8 werden dabei mit symmetrischer, d. h. bipolarer Pulsweitenmodulation angesteuert. In diesem Betriebsmodus sind alle antiparallel geschalteten Dioden 10 bis 13 als Freilaufdioden aktiv. **Fig. 10a** illustriert die hochfrequente Ansteuerung der Schalter 6 bis 9 bei dem Wechselrichter 1 gemäß Fig. 1 und **Fig. 10b** bei dem Wechselrichter 1 gemäß Fig. 2.

Im Falle der Anforderung statischer Blindleistung über einen längeren Zeitraum können mehrere Wechselrichter 1 wie in **Fig. 11** skizziert zur Abgabe von elektrischer Energie von jeweils einer Gleichspannungsquelle, hier in Form einer Photovoltaikanlage 37, miteinander vernetzt werden. Dabei erstreckt sich die Vernetzung nicht nur auf die gemeinsame Abgabe von elektrischer Leistung über einen Transformator 38 in das Wechselstromnetz sondern auch auf die gemeinsame Bereitstellung eines von cos phi = 1 abweichenden Leistungsfaktors. Um einen solchen Leistungsfaktor, der im Normalfall noch nahe bei 1 liegt, bereitzustellen, ohne den schlechteren Wirkungsgrad des Wechselrichters 1 bei der Blindleistungsabgabe gemäß Fig. 10 bei allen Wechselrichtern 1 in Kauf zu nehmen, kann eine übergeordnete Steuerung nur einen oder wenige der Wechselrichter 1 gemäß Fig. 11 zur Abgabe von Blindleistung ansteuern, während alle anderen Wechselrichter 1 reine Wirkleistung abgeben.

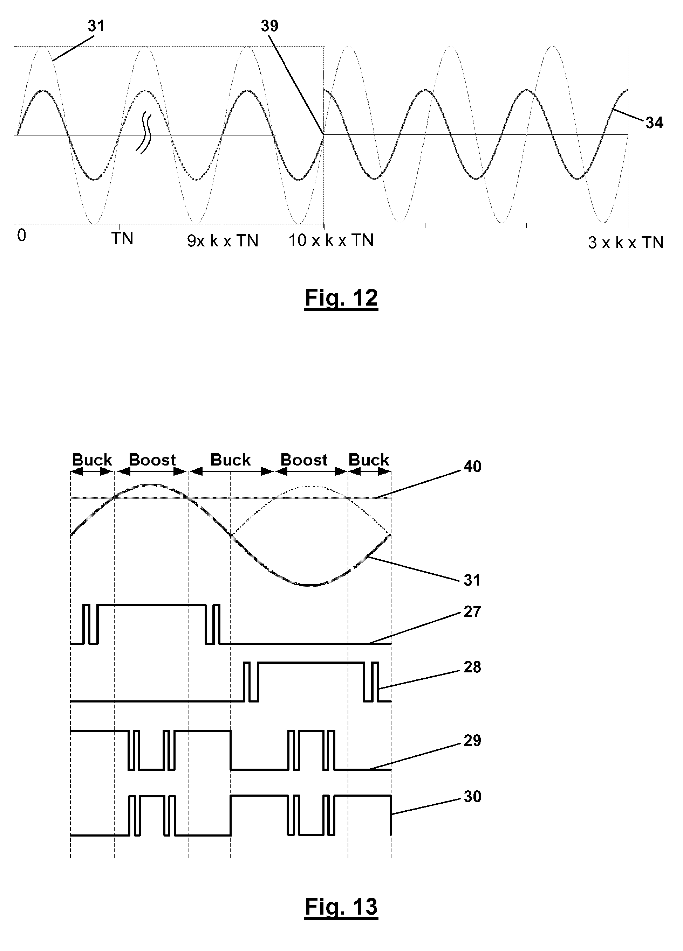

Bei einem einzelnen Wechselrichter 1 kann ein von cos phi = 1 abweichender Leistungsfaktor mit im Mittel immer noch hohem Wirkungsgrad dadurch bereit gestellt werden, dass phasenweise reine Wirkleistung gemäß Fig. 3 oder Fig. 4 und phasenweise reine Blindleistung gemäß **Fig. 10** eingespeist wird. Dies ist in Fig. 12 skizziert. Wird beispielsweise ein Leistungsfaktor cos phi = 0,95 angefordert, so speist der Wechselrichter 1 etwa 10*k Perioden der Netzspannung 31 volle Wirkleistung, d. h. einen Netzstrom 34 in Phase mit der Netzspannung 31 ein, und 3*k Perioden volle Blindleistung mit einem Phasenversatz zwischen der Netzspannung 31 und dem Netzstrom 34 von 90° bzw. π/2. Dabei erfolgt die Umschaltung zwischen den Betriebszuständen jeweils in einem Nulldurchgang 39 der Netzspannung 31. Durch Ausschalten der hochfrequent getakteten Schalter 8 und 9 kann eine Entmagnetisierung der Induktivitäten 18 und 19 sehr schnell erfolgen, da diese für hochfrequent getaktete Ströme ausgelegt sind. So kann schnell von einem Betriebsmodus in den anderen umgeschaltet werden.

**Fig. 13** skizziert eine gegenüber Fig. 5 alternative Ansteuerung der Schalter 7 und 6 sowie 20 und 21 bei einer Wirkleistungsabgabe durch den Wechselrichter 1, bei der die zwischen den Eingangsleitungen 22 und 23 anliegende Eingangsgleichspannung 40 hochgesetzt werden. Beim Hochsetzen für die positive Polarität der Ausgangswelle bleibt der Schalter 7 während eines Boost-Betriebsmodus eingeschaltet. Der Schalter 21 taktet derweil hochfrequent wie der Schalter eines Hochsetzstellers, während der Schalter 20 die Freilauffunktion erfüllt. Beim Hochsetzen für die negative Polarität bleibt entsprechend der Schalter 6 eingeschaltet, während der Schalter 20 hochfrequent taktet und der Schalter 21 die Freilauffunktion erfüllt. Dieser Boost-Betriebsmodus ist von besonderem Interesse, wenn die Eingangsgleichspannung 40 zwischen den Eingangsleitungen 22 und 23, d. h. die Ausgangsspannung der Gleichspannungsquelle 2 kleiner als der Scheitelwert des Netzspannung ist. Auf diese Weise wird es möglich, über einen erweiterten Eingangsspannungsbereich elektrische Energie in das Wechselstromnetz 3 einzuspeisen. Dazu muss der Boost-Betriebsmodus nur für die Abschnitte der Periode der Netzspannung 31 angewandt werden, in dem die Amplitude der Netzspannung 31 die Eingangsgleichspannung 40 überschreitet, wie dies in Fig. 13 dargestellt ist. Der geschilderte Boost-Betriebsmodus ist zwar mit einer Erhöhung der Durchlassverluste verbunden, da die Schalter 7 und 6 den gesamten Strom leiten und während der Freilaufphase jeweils zwei Schalter 7 und 20 bzw. 6 und 21 im Leistungsstrompfad liegen. Dagegen sinken die Schaltungsverluste, da nur die niedersperrenden Schalter 20 und 21 hochfrequent takten. Berücksichtigt werden muss auch, dass bei diesem Betriebsmodus das Potential der Gleichspannungsquelle gegen Erde hochfrequent geschaltet wird. Entsprechend erlaubt sich dieser Betriebsmodus nur dann, wenn eine galvanische Trennung vorhanden ist oder die Gleichspannungsquelle wie im Falle von Batterien oder Brennstoffzellen keine Kapazität gegenüber Erde aufweist.

**BEZUGSZEICHENLISTE**

| | | | |
|---|---|---|---|
| 1 | Wechselrichter | 21 | Schalter |
| 2 | Gleichspannungsquelle | 22 | Eingangsleitung |
| 3 | Wechselstromnetz | 23 | Eingangsleitung |
| 4 | Halbbrücke | 24 | MOSFET-Halbleiterschalter |
| 5 | Halbbrücke | 25 | Diode |
| 6 | Schalter | 26 | Diode |
| 7 | Schalter | 27 | Ansteuersignal |
| 8 | Schalter | 28 | Ansteuersignal |
| 9 | Schalter | 29 | Ansteuersignal |
| 10 | Diode | 30 | Ansteuersignal |
| 11 | Diode | 31 | Netzspannung |
| 12 | Diode | 32 | Strom |
| 13 | Diode | 33 | Strom |
| 14 | Mittelpunkt | 34 | Netzstrom |
| 15 | Mittelpunkt | 35 | Potentialverlauf |
| 16 | Ausgangsleitung | 36 | Potentialverlauf |
| 17 | Ausgangsleitung | 37 | Photovoltaikanlage |
| 18 | Induktivität | 38 | Transformator |
| 19 | Induktivität | 39 | Nulldurchgang |
| 20 | Schalter | 40 | Eingangsgleichspannung |

## Patentansprüche

1. Wechselrichter (1) mit zwei Eingangsleitungen (22, 23) zum Anschluss an eine Gleichspannungsquelle (2), mit zwei die beiden Eingangsleitungen (22, 23) verbindenden Halbbrücken (4, 5) und mit zwei Ausgangsleitungen (16, 17) zum Anschluss eines Wechselstromverbrauchers oder eines Wechselstromnetzes (3), wobei jede Ausgangsleitung (16, 17) über eine Induktivität (18 bzw. 19) an einen Mittelpunkt (14, 15) einer der Halbbrücken (4, 5) angeschlossen ist, und wobei beide Ausgangsleitungen (16 und 17), von der zugehörigen Halbbrücke (4 bzw. 5) aus hinter der Induktivität (18 bzw. 19), über jeweils einen weiteren taktbaren Schalter (20 bzw. 21) direkt mit derselben einen Eingangsleitung (22) verbunden sind, **dadurch gekennzeichnet, dass** jede Halbbrücke (4, 5) zwei taktbare Schalter (6,8 bzw. 7, 9) mit antiparallel geschalteten Dioden (10, 12 bzw. 11, 13) aufweist und dass eine Steuerung vorhanden ist, welche dazu eingerichtet ist, in jedem Betriebsmodus des Wechselrichters (1) vier der insgesamt sechs Schalter (6 bis 9, sowie 20, 21) zu takten und die beiden anderen Schalter offen zu halten und in einem Betriebsmodus des Wechselrichters (1) zum Ausgeben von Blindleistung die Schalter (6 bis 9) der Halbbrücken (4, 5) überkreuz mit einer Frequenz zu takten die um ein Vielfaches höher ist als die Frequenz, auf die der Wechselrichter (1) richtet.

2. Wechselrichter (1) nach Anspruch 1, **dadurch gekennzeichnet, dass** jede Ausgangsleitung (16, 17), von der zugehörigen Halbbrücke (4 bzw. 5) aus hinter der Induktivität (18 bzw. 19), über eine weitere Diode (25 bzw. 26) direkt mit der anderen Eingangsleitung (23) verbunden ist.

3. Wechselrichter nach Anspruch 1 oder 2, **dadurch gekennzeichnet, dass** die zwischen dem Mittelpunkt (14, 15) jeder Halbbrücke (4 bzw. 5) und der einen Eingangsleitung (22) vorgesehene antiparallele Diode (12 bzw. 13) der Halbbrücke (14 bzw. 15) eine Schottky-Diode ist.

4. Wechselrichter (1) nach mindestens einem der vorhergehenden Ansprüche, **dadurch gekennzeichnet, dass** der zwischen dem Mittelpunkt (14, 15) jeder Halbbrücke (4 bzw. 5) und der einen Eingangsleitung (22) vorgesehene Schalter (8 bzw. 9) ein IGBT-Halbleiterschalter ohne inhärente antiparallele Diode ist.

5. Wechselrichter (1) nach mindestens einem der vorhergehenden Ansprüche, **dadurch gekennzeichnet, dass** der zwischen dem Mittelpunkt (14, 15) jeder Halbbrücke (4 bzw. 5) und der anderen Eingangsleitung (23) vorgesehene Schalter (6 bzw. 7) ein MOSFET-Halbleiterschalter (24) mit inhärenter antiparalleler Diode ist.

6. Wechselrichter (1) nach mindestens einem der vorhergehenden Ansprüche, **dadurch gekennzeichnet, dass** jeder weitere Schalter (20, 21) ein IGBT-Halbleiterschalter oder ein Thyristor-Halbleiterschalter ohne inhärente antiparallele Diode oder ein MOSFET-Halbleiterschalter (24) mit inhärenter antiparallele Diode ist.

7. Wechselrichter (1) nach mindestens einem der vorhergehenden Ansprüche, **dadurch gekennzeichnet, dass** eine der beiden Ausgangsleitungen (16) geerdet ist.

8. Wechselrichter (1) nach mindestens einem der vorhergehenden Ansprüche, **dadurch gekennzeichnet, dass** die eine Eingangsleitung (22) für die positive Polarität der Gleichspannungsquelle (2) gegenüber Erde vorgesehen ist.

9. Wechselrichter (1) nach mindestens einem der vorhergehenden Ansprüche, **dadurch gekennzeichnet, dass** die Steuerung in einem Betriebsmodus des Wechselrichters (1) zum Ausgeben von reiner Wirkleistung die weiteren Schalter (20, 21) mit der Frequenz taktet, auf die der Wechselrichter (1) richtet, und die zwischen den Mittelpunkten (14, 15) der Halbbrücken (4, 5) und der anderen Eingangsleitung (23) angeordneten Schalter (6, 7) mit einer um ein Vielfaches höheren Frequenz taktet.

10. Wechselrichter (1) nach mindestens einem der vorhergehenden Ansprüche, 1 - 8 **dadurch gekennzeichnet, dass** die Steuerung in einem Betriebsmodus des Wechselrichters (1) zum Ausgeben von reiner Wirkleistung mit hochgesetzter Eingangsgleichspannung (40) die zwischen den Mittelpunkten (14, 15) der Halbbrücken (4, 5) und der anderen Eingangsleitung (23) angeordneten Schalter (6, 7) wechselweise vorübergehend geschlossen hält und dabei die weiteren Schalter (20, 21) mit einer Frequenz taktet, die um eine Vielfaches höher ist als die Frequenz, auf die der Wechselrichter (1) richtet.

11. Wechselrichter (1) nach mindestens einem der vorhergehenden Ansprüche, **dadurch gekennzeichnet, dass** eine Steuerung einen von cos phi = 1 abweichenden Leistungsfaktor des ausgegebenen Wechselstroms durch blockweises Ausgeben von reiner Wirkleistung und reiner Blindleistung über jeweils mehrere Perioden des Wechselstroms realisiert.

12. Wechselrichter (1) nach Anspruch 11, **dadurch gekennzeichnet, dass** die Steuerung in einem Nulldurchgang (39) der Spannung zwischen dem Ausgeben von Wirkleistung und Blindleistung umschaltet.

13. Parallelschaltung von mehreren Wechselrichtern (1) nach mindestens einem der vorhergehenden Ansprüche, 1 - 10 **dadurch gekennzeichnet, dass** eine übergeordnete Steuerung einen von cos phi = 1 abweichenden Leistungsfaktor des insgesamt ausgegebenen Wechselstroms durch Ausgeben von reiner Wirkleistung mit der Mehrzahl der Wechselrichter (1) und von Blindleistung mit wenigen Wechselrichtern (1) realisiert.

## Claims

1. Inverter (1) with two input lines (22, 23) for connection to a DC source (2), with two half bridges (4, 5) connecting the two input lines (22, 23), and with two output lines (16, 17) for connection to an AC load or an AC grid (3), wherein each output line( (16, 17) is connected to a midpoint (14, 15) of one of the half bridges (4, 5) via an inductivity (18, 19), and wherein both output lines (16, 17) are directly connected to the same one of the input lines (22) via a clockable corresponding further switch (20, 21) at a point behind the inductivity (18, 19) with respect to the corresponding half bridge (4, 5), **characterized in that** each of the half bridges (4, 5) comprises two clockable switches (6, 8 and 7, 9) with antiparallel diodes (10, 12 and 11, 13), and **in that** a control unit is provided configured to clock four of the overall six switches (6 to 9 and 20, 21), and to keep the other two switches open in any operation mode, and configured to crosswisely clock the switches (6 to 9) of the half bridges (4, 5) in an operation mode for outputting reactive power at a frequency being multiply higher than the inverting frequency of the inverter (1).

2. Inverter (1) of claim 1, **characterized in that** each of the output lines (16, 17) is directly connected to the other input line (23) by a further diode (25, 26) at a point behind the inductivity (18, 19) with respect to the corresponding half bridge (4, 5).

3. Inverter (1) of claim 1 or 2, **characterized in that** the antiparallel diode (12, 13) of the half bridge (4, 5) provided between the midpoint (14, 15) of each of the respective half bridges (4, 5) and the one of the input lines (22) is a Schottky-Diode.

4. Inverter (1) of at least one of the preceding claims, **characterized in that** the switch (8, 9) provided between the one of the input lines (22) and the midpoint (14, 15) of each of the half bridges (4, 5) is an IGBT semiconductor switch without inherent antiparallel diode.

5. Inverter (1) of at least one of the preceding claims, **characterized in that** the switch (6, 7) provided between the other input line (23) and the midpoint (14, 15) of each of the half bridges (4, 5) is a MOSFET semiconductor switch with inherent antiparallel diode.

6. Inverter (1) of at least one of the preceding claims, **characterized in that** each of the further switches (20,21) is an IGBT semiconductor switch or an Thyristor semiconductor switch without inherent antiparallel diode or a MOSFET semiconductor switch with inherent antiparallel diode.

7. Inverter (1) of at least one of the preceding claims, **characterized in that** one of the output lines (16) is grounded.

8. Inverter (1) of at least one of the preceding claims, **characterized in that** the one of the input lines (22) for the positive polarity of the DC source (2) is grounded.

9. Inverter (1) of at least one of the preceding claims, **characterized in that** in an operation mode for outputting only active power the control unit clocks the further switches (20, 21) at the inverting frequency of the inverter (1), and clocks the switches (6, 7) provided between the other input line (23) and the midpoint (14, 15) of the half bridges (4, 5) at a frequency being multiply higher.

10. Inverter of at least one of the claims 1 to 8, **characterized in that** in an operation mode for outputting only active power with boosted DC input voltage (40) the control unit alternatively keeps the switches (6, 7) provided between the other input line (23) and the midpoint (14, 15) of the half bridges (4, 5) temporarily closed, and clocks the further switches (20, 21) at a frequency being multiply higher than the inverting frequency of the inverter (1).

11. Inverter (1) of at least one of the preceding claims, **characterized in that** a control realizes AC outputting at a power factor deviating from cos phi = 1 by respectively blockwise outputting active power only and reactive power only for several AC periods.

12. Inverter (1) of claim 11, **characterized in that** the control switches between outputting active power and reactive power at a voltage zero crossing (39).

13. Parallel circuit of several inverters (1) of at least one of the preceding claims 1 to 10, **characterized in that** a superordinate control realizes overall AC outputting at a power factor deviating from cos phi = 1 by outputting active power only by a majority of the several inverters (1) and outputting reactive power only by a minority of the several inverters (1).

## Revendications

1. Onduleur (1) comprenant deux lignes d'entrée (22, 23) destinées à être raccordées à une source de tension continue (2), comprenant deux demi-ponts (4, 5) qui relient les deux lignes d'entrée (22, 23) et comprenant deux lignes de sortie (16, 17) destinées à être raccordées à un consommateur de courant alternatif ou un réseau à courant alternatif (3),
dans lequel chaque ligne de sortie (16, 17) étant raccordée par le biais d'une inductance (18 ou 19) à un point central (14, 15) de l'un des demi-ponts (4, 5), et
dans lequel les deux lignes de sortie (16, 17) étant reliées par le biais d'un commutateur cadençable supplémentaire (20 ou 21) situé derrière l'inductance (18 ou 19), vue depuis le demi-ponts (4, 5) associé, à la même l'une ligne d'entrée, **caractérisé en ce que** chaque demi-pont (4, 5) possède deux commutateurs cadençables (6, 8 ou 7, 9) munis de diodes (10, 12 ou 11, 13) branchées en tête-bêche et **en ce qu'**il existe une commande qui est conçue pour, dans chaque mode de fonctionnement de l'onduleur (1), cadencer quatre commutateurs parmi le total de six commutateurs (6 à 9 et 20, 21) et laisser les deux autres commutateurs ouverts et, dans un mode de fonctionnement de l'onduleur (1) destiné à délivrer une puissance réactive, cadencer les commutateurs (6 à 9) des demi-ponts (4, 5) de manière croisée avec une fréquence qui est plusieurs fois supérieure à la fréquence à laquelle ondule l'onduleur (1).

2. Onduleur (1) selon la revendication 1, **caractérisé en ce que** chaque ligne de sortie (16, 17), depuis le demi-pont (4 ou 5) associé et après l'inductance (18 ou 19), est reliée directement à l'autre ligne d'entrée (23) par le biais d'une diode supplémentaire (25 ou 26).

3. Onduleur selon la revendication 1 ou 2, **caractérisé en ce que** la diode en tête-bêche (12 ou 13) du demi-pont (14 ou 15) présente entre le point central (14, 15) de chaque demi-pont (4 ou 5) et l'une ligne d'entrée (22) est une diode Schottky.

4. Onduleur (1) selon au moins l'une des revendications précédentes, **caractérisé en ce que** le commutateur (8 ou 9) présent entre le point central (14, 15) de chaque demi-pont (4 ou 5) et l'une ligne d'entrée (22) est un commutateur semiconducteur IGBT sans diode en tête-bêche intégrée.

5. Onduleur (1) selon au moins l'une des revendications précédentes, **caractérisé en ce que** le commutateur (6 ou 7) présent entre le point central (14, 15) de chaque demi-pont (4 ou 5) et l'autre ligne d'entrée (23) est un commutateur semiconducteur MOSFET (24) avec diode en tête-bêche intégrée.

6. Onduleur (1) selon au moins l'une des revendications précédentes, **caractérisé en ce que** chaque commutateur supplémentaire (20, 21) est un commutateur semiconducteur IGBT ou un commutateur semiconducteur de type thyristor sans diode en tête-bêche intégrée ou un commutateur semiconducteur MOSFET (24) avec diode en tête-bêche intégrée.

7. Onduleur (1) selon au moins l'une des revendications précédentes, **caractérisé en ce que** l'une des deux lignes de sortie (16) est reliée à la terre.

8. Onduleur (1) selon au moins l'une des revendications précédentes, **caractérisé en ce que** l'une ligne d'entrée (22) est conçue pour la polarité positive de la source de tension continue (2) par rapport à la terre.

9. Onduleur (1) selon au moins l'une des revendications précédentes, **caractérisé en ce que** la commande, dans un mode de fonctionnement de l'onduleur (1) destiné à délivrer une puissance active pure, effectue le cadencement du commutateur supplémentaire (20, 21) à la fréquence à laquelle ondule l'onduleur (1) et cadence les commutateurs (6, 7) disposés entre les points centraux (14, 15) des demi-ponts (4, 5) et l'autre ligne d'entrée (23) avec une fréquence plusieurs fois supérieure.

10. Onduleur (1) selon au moins l'une des revendications précédentes 1 à 8, **caractérisé en ce que** la commande, dans un mode de fonctionnement de l'onduleur (1) destiné à délivrer une puissance active pure avec une tension continue d'entrée (40) relevée, maintient temporairement fermés en alternance les commutateurs (6, 7) disposés entre les points centraux (14, 15) des demi-ponts (4, 5) et l'autre ligne d'entrée (23) et cadence alors les commutateurs supplémentaires (20, 21) avec une fréquence qui est plusieurs fois supérieure à la fréquence à laquelle ondule l'onduleur (1).

11. Onduleur (1) selon au moins l'une des revendications précédentes, **caractérisé en ce que** la commande réalise un facteur de puissance du courant alternatif délivré qui est différent de cos phi = 1 en délivrant bloc par bloc de la puissance active pure et de la puissance réactive pure respectivement sur plusieurs périodes du courant alternatif.

12. Onduleur (1) selon la revendication 11, **caractérisé en ce que** la commande permute entre la délivrance de la puissance active et de la puissance réactive lors d'un passage par zéro (39) de la tension.

13. Circuit parallèle composé de plusieurs onduleurs (1) selon au moins l'une des revendications précédentes 1 à 10, **caractérisé en ce qu'**une commande de supervision réalise un facteur de puissance du courant alternatif total délivré qui est différent de cos phi = 1 en délivrant de la puissance active pure avec la plupart des onduleurs (1) et de la puissance réactive avec moins d'onduleurs (1).
